**Europäisches Patentamt**

**European Patent Office**

**Office européen des brevets**

(19)

(11) **EP 1 237 313 A1**

## (12) EUROPEAN PATENT APPLICATION
published in accordance with Art. 158(3) EPC

(43) Date of publication:
**04.09.2002 Bulletin 2002/36**

(21) Application number: **01965564.6**

(22) Date of filing: **10.09.2001**

(51) Int Cl.7: **H04J 13/04**, H04B 1/707

(86) International application number:
**PCT/JP01/07832**

(87) International publication number:
**WO 02/023782 (21.03.2002 Gazette 2002/12)**

(84) Designated Contracting States:
**DE FR GB**

(30) Priority: **12.09.2000 JP 2000318600**
**18.09.2000 JP 2000321842**

(71) Applicants:
- **TOYO COMMUNICATION EQUIPMENT CO. LTD.**
  **Kouza-gun, Kanagawa 253-0192 (JP)**
- **Kuroyanagi, Noriyoshi**
  **Higashiyamato-shi, Tokyo 207-0022 (JP)**
- **Suehiro, Naoki**
  **Tsukuba-shi, Ibaraki 305-0031 (JP)**

(72) Inventors:
- **KUROYANAGI, Noriyoshi**
  **Higashiyamato-shi, Tokyo 207-0022 (JP)**
- **SUEHIRO, Naoki**
  **Tsukuba-shi, Ibaraki 305-0031 (JP)**
- **TAKAHASHI, Masakazu,**
  **Toyo Communication Equip Co L**
  **Kanagawa 253-0192 (JP)**

(74) Representative: **Grosse, Wolfgang, Dipl.-Ing.**
  **Patentanwälte**
  **Herrmann-Trentepohl**
  **Grosse - Bockhorni & Partner,**
  **Forstenrieder Allee 59**
  **81476 München (DE)**

(54) **ROTATE SHIFT CODE DIVISION MULTIPLEX COMMUNICATION SYSTEM**

(57) A system using a transmitter which comprises means of generating 4 extended sequences $E_{A0}$, $E_{A1}$, $E_{B0}$ and $E_{B1}$ using a set $(A_0, A_1)$ of auto-complementary sequences with length L chips consisting of complete complementary sequences and another similar set $(B_0, B_1)$, and means of generating a transmitting frame $s_P$ obtained by multiplying a cascaded sequence $\hat{E}_A$ made of extended sequences $E_{A0}$ and $E_{A1}$ by a pilot information $p$, generating a transmitting frame $s_D$ obtained by multiplying a cascaded sequence $\hat{E}_B$ made of extended sequences $E_{B0}$ and $E_{B1}$ by data b, synchronously adding both the transmitting frames to produce a symbol frame, and transmitting a carrier wave modulated thereby, and a receiver which comprises means of applying a front portion $r_0$ of the synchronously received baseband frame demodulated by above described carrier wave to matched filters $M(A_0)$ and $M(B_0)$, and applying a rear portion $r_1$ of the synchronously received frame to matched filters $M(A_1)$ and $M(B_1)$, and means of generating a pilot-response-matrix $\{p\}$ and a received data-response-matrix $\Phi$, both made of the outputs of $M(A_0)$ and $M(A_1)$, and of the outputs of $M(B_0)$ and $M(B_1)$ respectively, and generating an estimate $\tilde{b}$ of transmitted data.

Fig. 2

**Description**

Field of the Invention

The present invention relates to a communications system that uses spread spectrum modulation to enhance the resistance of the system to interference noise, giving an especially detrimental effect among the noise admixed in the transmission process. The present invention also relates to a communications system that uses baseband pulse modulation or bandpass type data modulation so as to enforce resistance to colored noise.

Background Art

In spread spectrum communications, a spreading code sequence is modulated by transmission data so that the data with a relatively narrow band spectrum, is spread over a wide frequency band and then transmitted. Such a communications system is superior in that the transmission power per unit frequency is low, interference to other communications can be kept at a relatively low level, and in that the system has an inherent strong resistance to ambient noise that is admixed in the transmissions process, e.g., general incoming noise and interference noise incoming from mobile stations or interfering stations other than a desired station. However, because communications performed by numerous stations share the same bandwidth, arises a problem such that communications performance degradation caused by the interference noise tends to be a predominant factor.

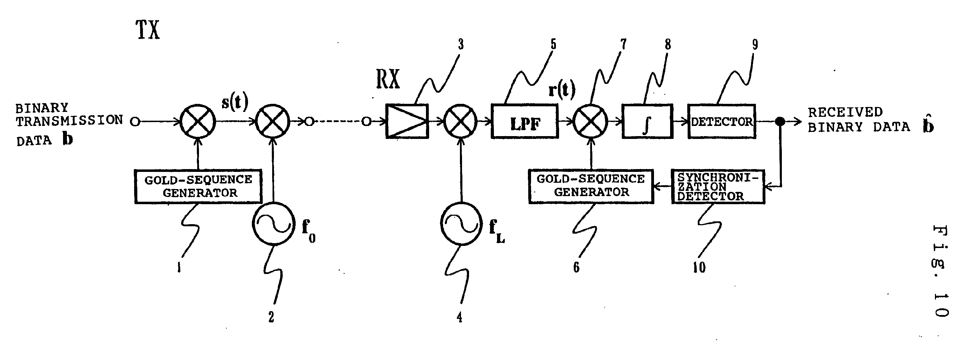

Figure 10 is a block diagram illustrating the general construction of a mobile communications system which performs spread spectrum communications via a radio communications channel. Here, a transmitter TX modulates a spreading code sequence generated by a sequence generator 1, by multiplying it by binary transmission data b, thus producing a baseband transmission output s(t). Transmitter TX further modulates this baseband transmission output s(t) using a carrier waveform of a frequency $f_0$ which is generated by an oscillator 2, so that the carrier waveform containing data b is spread over a spectrum. Transmitter TX then transmits this waveform to a receiver RX via a radio communications channel. Furthermore, a pseudo-noise (PN) sequence whose period is the same as the bit length of data b is generally used as the spreading code sequence. In the following description, Gold-sequences (hereafter simply referred to as "G sequences") will be used as an example and because they are the most common type in many PN sequences.

Receiver RX sends the spread-spectrum-modulated signal to an amplifier 3 via an antenna (not shown in the figures), amplifies the signal up to a required level, and then frequency-mixes the amplified signal with a local signal $f_L$ (= $f_0$) frome a local oscillator 4. Receiver RX then demodulates the resultant signal into a baseband received spread signal r(t) by passing through a low pass filter 5. In other words, coherent demodulation or non-coherent demodulation is performed.

This baseband spread signal r(t) is inputted into a multiplier 7 with an M sequence that is the same as the sequences used by transmitter TX and generated by the sequence generator 6. The resultant multiplied output is then integrated by an integrator 8 for the period of the sequence length of the M sequence (1 frame), to obtain a matched filter output. This output is detected by a detector 9 at the end of the frame, and the received binary data b is then detected by means of a hard-decision function which compares this output with a threshold value. A control signal created based upon this detected data is inputted into a control terminal of sequence generator 6 via a synchronization detector 10, and the generating timing of G sequence is controlled so that the sequence phase may be synchronized with the received signal. Furthermore, in receiver RX shown in Fig. 15, the arrangement of the multiplying functions provided by local oscillator 4 and sequence generator 6 is often exchanged each other; however, the overall demodulation function remains the same.

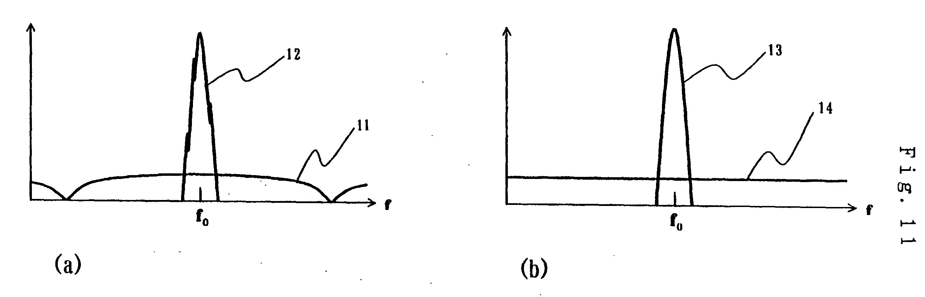

Figure 11 schematically shows spectra of a signal being transmitted. In Fig. 11(a), reference numeral 11 denotes a spectrum of a spectrum spread modulated signal, and reference numeral 12 denotes a spectrum of admixed environmental noise. When the receiver demodulates (despreads) this signal and noise using the G sequence, the spectrum spread modulated signal 11 which has been spread over a wide frequency band as shown in Fig. 11(b) is converted into a narrow-band signal 13, and the environmental noise 12 is converted into a signal 14 which has been distributed over a wide frequency band. Accordingly, this communications method can suppress the disturbance due to the environmental noise.

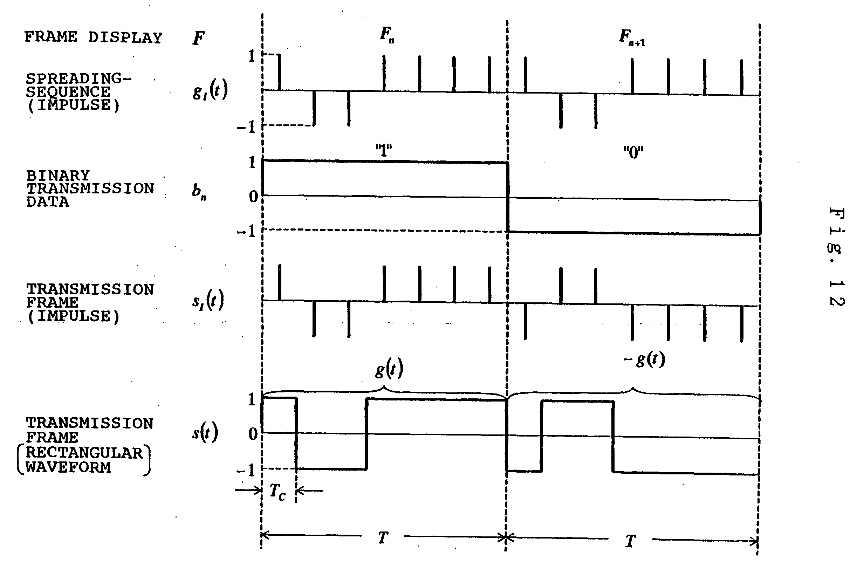

Figure 12 is a diagram showing the relationship between a G (impulse) sequence $g_I$ and binary information in a conventional direct sequence spread spectrum communications system (DS-SS). This is an example in which the sequence length L = 7 (chips). In this figure, b indicates the binary data that is to be transmitted, T indicates the period of the data b (frame period), $T_c$ indicates the chip period, and $s_I(t)$ indicates an output obtained by multiplying $g_I(t)$ by b. A transmission frame s(t) is a transmission baseband waveform obtained by replacing the individual impulses of $s_I$(t) with rectangular waveforms. Thus, $g_I(t)$ and g(t) are given by:

$$g_I(t) = \sum_{i=0}^{L-1} c_i \delta(t - iT_C) \quad 0 \le t \le T \tag{1}$$

$$g(t) = \sum_{i=0}^{L-1} c_i q_1(t - iT_C) \quad 0 \le t \le T \tag{2}$$

$$\left.\begin{array}{ll} q_1(t) = 1 & |t| \le \dfrac{T_C}{2} \\[3mm] \quad = 0 & |t| \le \dfrac{T_C}{2} \end{array}\right\} \tag{3}$$

where $c_i$ (i = 0, 1, 2, ..., L-1: L is the sequence length of a spreading sequence) is the i-th chip amplitude of the spreading sequence, $\delta$ is a delta function, and $q_1$ is a square waveform function. As shown in the figure, a square waveform is sent out in response to a value "1", and an inverted output $\overline{g(t)}$ is sent out in response to a value "0". Actually, s(t) is transmitted after converting baseband signal into a radio frequency band whose bandwidth is limited to $f_c = T_c^{-1}$. Accordingly, the frequency bandwidth occupied by the data signal is substantially $f_D = 1/T$, and that of the spread transmitting baseband signal s(t) is substantially $f_c = T_c^{-1}$. In this case, the following equation is established:

$$f_c = Lf_D \tag{4}$$

Furthermore, instead of using the rectangular waveform $q_1(t)$ given by Eq.(3), it is possible to use such a waveform $q_1{}'(t)$ that the auto-correlation function at an adjacent sampling point may take zero (called the sampling function, and the DFT conversion of $q_1(t)$ has a cosine roll-off characteristic). In this case, if the receiver prepares the same waveform $q_1{}'(t)$ as that of the transmitting side and performs correlative demodulation using the waveform, the desired waveform components of the received signal will be restored as the impulse sequence indicated by Eq.(2). The signal can be detected by despreading this impulse sequence with $g_I(t)$. Since the spread-spectrum modulated signal thus occupies an extremely broad frequency bandwidth, colored noise power (component in-phase with the signal g(t)) can be suppressed to 1/L, so this system is noise resistant.

In general, however, L >> 1 holds good, and in spite of the use of a bandwidth L times as large as that of the data signal, the number of simultaneous calls $K_s$ is given by $K_s \ll L$ (a fraction of the value L); the simultaneous transmission capacity/Hz is ($K_s$/L) times as large as that of a time-division multiplex system (TDMA). Consequently, this system is disadvantageous in terms of transmission frequency-band utilization-efficiency is generally extremely low compared to that of a time-division multiplex system.

Thus, the reason why the number of simultaneous calls $N_s$ cannot be set to a very large value compared to L is that the cross-correlation coefficient between G sequence $g_0(t)$ assigned to the desired station and different G sequence $g_k(t)$ (k ≠ 0) assigned to another mobile station cannot be sufficiently small. Furthermore, the suppressing effect on colored noise or transmission noise accompanying fading or delayed waveforms caused by multiple reflections (multipath) during the transmission process is also generally insufficient. Essentially these factors reduce the frequency utilization efficiency of the conventional spread spectrum communication system.

The process gain $G_P$ of the conventional direct sequence spread spectrum communications system is given by:

$$G_p = 10 \log_{10} L \tag{5}$$

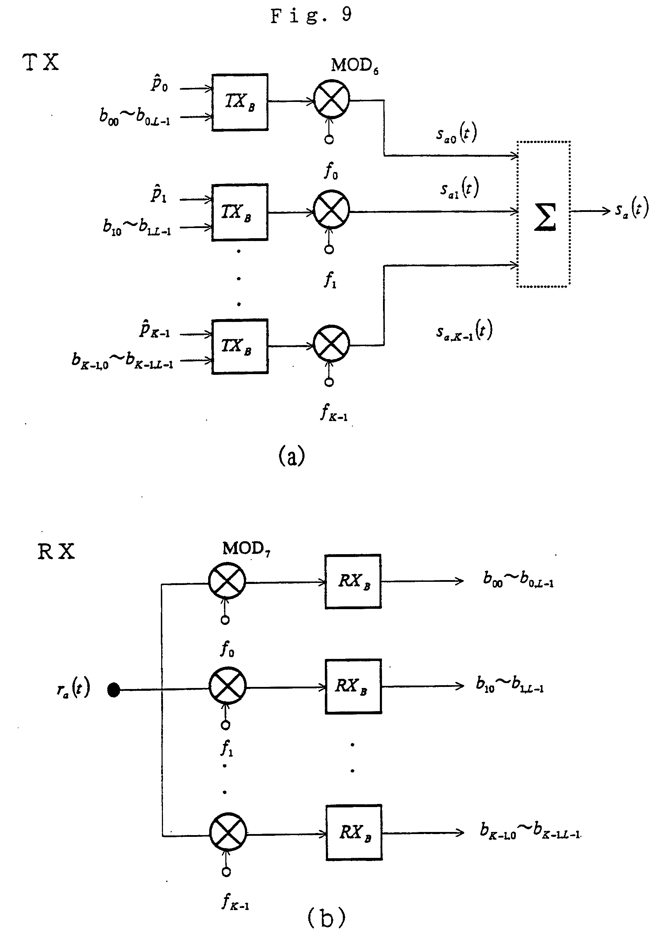

If an incoming noise has a single frequency, and is in phase with the sequence $g_0(t)$, the demodulated noise power obtained after the demodulation by the receiver (an output from integrator 8 in Fig. 15) will be 1/L times as much as the incoming noise power (an output from the LPF 5 in Fig. 9), as described above. However, the mean value of the cross-correlation between different G sequences is given by $\rho = 1/\sqrt{L}$, but the worst correlation value is significantly larger than the mean. Because sequences $g_0(t)$ and $g_K(t)$ are modulated by mutually independent transmission information, and the cross-correlation varies with mutual frame phases of these sequences. As a result, numerous interference waveforms with a large cross -correlation are applied to the receiver over a long period of time, thus significantly degrading the code error rate. Therefore, this is a problem such that the number of simultaneous calls $N_s$ cannot be set to a large value.

Moreover, the error rate is further forced to increase by an increase in self-interference noise and inter-station interference noise which are caused by delayed waveforms resulting from multiple reflections (multipath) during transmission, or by a decrease in the receiving signal to noise ratio (SNR) associated with fading. Principally these factors reduce the frequency utilization efficiency of the CDMA system. The present invention relates to a technique that can deal not only with the narrow-band noise but also with the inter-station interference noise (wide-band noise) as described above or inter-cell interference noise generated by similar communications carried out in other cells (service areas in the mobile communications system).

The inventor already applied a patent entitled by "pilot assisted CDMA communications system(application number PH11-154226) with interference separating function" in order to suppress the above-described interference noise and increase the frequency-utilization-efficiency simultaneously. A paper[N.Suehiro, et al. "High Rate Information Transmission Based on Multipath Estimation and Signal Convolution in Approximately Synchronized CDMA Systems Without Co-Channel Interference" WPMC'99] was also presented. In these works, such examples were described that a transmitter uses 2 complementary sequence sets $(A_0,A_1)$ and $(B_0,B_1)$ which compose complete complementary sequences mutually, and generates a transmitting frame by a method of modulating 2 orthogonal carrier waveforms $f_0$ and $f_1$ by these sets and then transmit them. In this embodiment, the pilot information $p$ modulates $(A_0,A_1)$, the data information b modulates $(B_0,B_1)$, and $p A_0$ and $bB_0$ modulate $f_0$, $p A_1$ and $bB_1$ modulate $f_1$, to generate the transmitting frame by adding the both modulated outputs. The transmission process produces delayed waveforms due to many multipaths generally. Each frame is converted into a waveform(flock-frame) made of one group including these delayed waveforms. The flock-frame arrives in a receiver. In this case, the sum of the outputs of the matched filters $M(A_0)$ and $M(A_1)$ at the receiver generates only a pilot associated correlation component $\Lambda_P[=\{p\}]$, and the sum of the outputs of the other matched filters $M(B_0)$ and $M(B_1)$ generates only a correlation component $\Lambda_D[=\Phi]$ associated with the data b, because of the complete complementary characteristic of $(A_0,A_1)$ and $(B_0,B_1)$, even if there is a delay time ($\tau$) between the direct waveform (or, the main waveform of the demodulation object) and a delayed waveform. As a result, an estimate $\tilde{b}$ of a transmitted data b can be obtained as a value without being subjected to influence of multipath, when using $\Lambda_P$ and $\Lambda_D$. Consequently, the components of $p$ and b can be isolated perfectly.

But, a phase deviation ($\Delta\theta$) of the carrier wave arises associated with delay time ($\tau$) between the above-described direct wave and delayed wave generally. When $\tau$ and $\Delta\theta$ occur simultaneously, their effects to these baseband demodulated outputs are different depending on the carrier waves. It results in that the correlation function of $A_0$ and $B_1$ and the correlation function of $A_1$ and $B_0$ do not cancel each other, and as a result, for example, a component of $\Lambda_D$ mixes with the sum of the outputs of $M(A_0)$ and $M(A_1)$ to prevent the above-described perfect separating function given by $\Lambda_P$ and $\Lambda_D$. Consequently, estimate $\tilde{b}$ is deteriorated, and the detection of accurate data information b becomes impossible.

The present invention provides a cyclically shifted code division multiple access communications system which can perform to detect accurately data b, even if the phase deviation ($\Delta\theta$) of the carrier waveforms occurs simultaneously with time delay ($\tau$) between a direct wave and a delayed wave, because the imperfect demodulation operation in a receiver is avoided.

Description of the Invention

Since in the invention given in Claim 1 of a cyclically shifted code division multiple access communications system concerning the present invention, a transmitter generates a pilot frame and a data frame using auto-complementary sequence sets $(A_0,A_1)$ and $(B_0,B_1)$ which compose complete complementary sequences each other, arranges $A_0$ and $B_0$ on the 1-st frame time position, similarly $A_1$ and $B_1$ on the 2-nd frame time position, and transmits all of them using the same carrier wave $f_0$, the sum of the correlation function between $A_1$ and $B_0$ and the correlation function between $A_0$ and $B_1$ results in taking zero in the demodulation process of a receiver. That is to say, any influence to the correlation functions due to above-described $\tau$ and $\Delta\theta$ does not generate, because the time positions of $A_0$ and $B_1$ are different each other and a common carrier wave is used for all of them. On the other hand, the frequency-utilization-efficiency does not reduce although the occupied time duration width is twice as long as that used by the existing systems, since it uses only $f_0$ instead of using $f_0$ and $f_1$ as the carrier waves. In short, it is useful to realize an operation which can perfectly separate $\Lambda_P$ and $\Lambda_D$ without any frequency-utilization-efficiency reduction.

The invention given in Claim 2 of a cyclically shifted code division multiple access communications system concerning the present invention offers a method of transmitting L multiplexed data $b_n(n=0,1,2,...L-1)$ corresponding to the length L of respective complementary sequences by using perfect separating function in Claim 1. Since in this system plural data frames are generated by such a method as modulating a cascaded sequence $\hat{E}_B(n)$ consisted of the cyclically shifted frames $[B_0(n),B_1(n)]$ by $b_n$, and said data frames and the above-described pilot frame are summed up, and then the resultant output is transmited, it is effective to realize the multiple transmission of L bits on the time duration used in the system of Claim 1.

The invention given in Claim 3 of a cyclically shifted code division multiple access communications system concerning the present invention was made in order to respond to the transmission demand of a large number (K) of users in an identical cell, because Claims 1 to 2 offer transmission systems for 1 user. This system uses such a transmission method that, for example, the system produces a core sequence $KA_0(KA_1)$ with time width $T_G$ having a comb spectrum characteristic occupying L frequency slots by repeating K times of $A_0(A_1)$ which is a auto-complementary sequence, and produces a cascaded sequence $\hat{E}_{AK}$ using $KA_0$ and $KA_1$. In the same way, the system produces similar sequences by making sequences $A_1$, $B_0$ and $B_1$ so as to have the same spectrum. The carrier wave for $u_k$ is designed to be $f_k=f_0+kf_G$, where $f_G=T_G^{-1}$ is the shift frequency. The transmitter of $u_k$ modulates cascaded sequences $\hat{E}_{AK}$ and $\hat{E}_{BK}$ on $f_k$ made of the above-described core-sequences, by pilot $p_k$ and data $b_k$, and sum up them and then transmit the resultant output. This method is effective to realize frequency division multiple transmission which can transmit K user data with high frequency efficiency without interfering each other.

Since the invention given in Claim 4 a cyclically shifted code division multiple access communications system concerning the present invention is a system which transmits L bit data using the cyclically shifted sequence in Claim 2, it is effective that the system of Claim 4 has L times as large frequency-utilization-efficiency as that of the system of Claim 3.

The invention given in Claim 5 of a cyclically shifted code division multiple access communications system concerning the present invention is to realize an advantageous effect in a system design such that the transmission capacity each user utilizes may be flexibly changed by allocating an arbitrary number of the orthogonal carrier waves to respective users shown in Claims 3 and 4.

The invention given in Claims 6 and 7 of a cyclically shifted code division multiple access communications system concerning the present invention offers a system that the pilot frame shown in Claims 1 to 3 is transmitted once per N frames, and data frame using $(A_0,A_1)$ modulated by data $b_n'$ on the other N-1 frames, and the data frame using $(B_0,B_1)$ are summed up, and then the resultant output is transmitted. In this case, the frequency-utilization-efficiency can be approximately doubled, if a relation N>>1 is taken.

Brief Description of the Drawings

Fig. 1 is an illustration of intra-cell transmission paths in a CDMA mobile communications system. Fig. 1(a) is a view showing the up-link transmission paths, and Fig. 1(b) is a view showing the down-link transmission paths.
Fig. 2(a) is a view showing transmitting frame format, and Fig. 2(b) is a view showing receiving frame format.
Fig. 3 is a view showing the correlation property of complementary sequences.
Fig. 4 is a view showing basic composition of transmitting symbol frames.
Fig. 5 is a view showing the front components of the transmitting and receiving symbol frames for data.
Fig. 6 is a view showing the data frame composition of a chip shift multiplex system.
Fig. 7 is block diagrams of a transmitter and a receiver circuits according to the first embodiment of the present invention. Fig. 7(a) is a block diagram of the transmitter circuit TX, and Fig. 7(b) is a block diagram of the receiver circuit RX.
Fig. 8 is a diagram showing the pilot and the data frame compositions of a multiplex system using comb-formed orthogonal frequencies.
Fig. 9(a) is a block diagram showing a transmitter circuit according to the second embodiment, and Fig. 9(b) is a block diagram showing a receiver circuit according to the second embodiment.
Fig. 10 is a block diagram showing a general configuration of a spread spectrum mobile communications system.
Fig. 11 is a schematic view of spectra of signals being transmitted.
Fig. 12 is a diagram showing relation between binary information and transmitting frame signals in a conventional direct-sequence spread-spectrum communications system.

The Best Mode for Carrying-Out of the Invention

The present invention is to overcome the above described disadvantages of CDMA communications systems which are vulnerable to the multipath and interference waves. According to the present invention, a transmitter has a function of transmitting pilot frames, and a receiver has a function of removing interfering components due to the multipath and interference waves contained in data frames by using received response information obtained from pilot frames. Here, the main description is carried out by referring to a mobile communications system which indicates a large effect when this invention is applied. In the system, conversion to a radio frequency band such as PSK is performed after spectrum spreading modulation(SS).

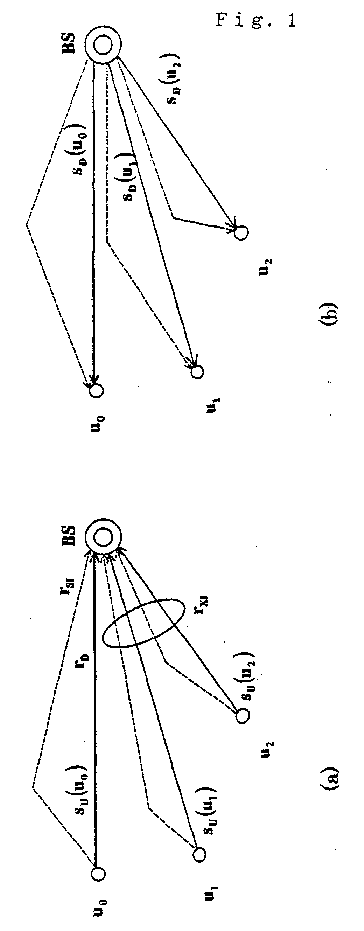

Fig. 1 is an illustration for supplementary explanation of the present invention showing intra-cell transmission paths of a CDMA mobile communications system. The up-link transmission in Fig. 1(a) shows that a mobile station $u_i$ (i = 0,1,2,.....K) (hereafter referred to as a "user station") transmits a transmitting wave $s_u(u_i)$ to a base station BS. If the 0-th user $u_0$ is assumed to be a desired station, the received wave $r_D$ that is a direct wave arrived at base station BS is the desired wave. In this case, the dotted lines indicate multipath delayed wave. A delayed wave generated by the desired wave is a self-interference wave $r_{SI}$. On the other hand, the transmitted waves from the user stations (also referred to as interference stations) other than the desired station are received as inter-station interference waves $r_{XI}$. These interference waves include not only direct waves but also multipath delayed waves as shown in the figure. Thus, a received interference wave $r_I$ is the sum of the self-interference waves and the other-station interference waves. If all the received waves are denoted as r, it is represented as:

$$r(t)=r_D(t)+r_1(t) \tag{6}$$

$$r_1(t)=r_{SI}(t)+r_{XI}(t) \tag{7}$$

Fig. 1(b) shows down-link transmission paths, where multipath delayed waves are also generated as shown by the dotted lines. Further, the waves user station $u_0$ received includes not only the transmitted wave $s_D(u_0)$ and its delayed waves, shown in the figure, but also waves transmitted to another station $s_D(u_i)(i \neq 0)$ and its delayed waves, which are not shown. In the down-link transmission, it takes the same time for the interference waves and the desired waves to reach desired station $u_0$. Accordingly, if only the direct wave is considered, then all the interference waves are synchronously received, resulting in synchronous transmission, thus it reduces interference degradation compared to the up-link asynchronous transmission.

If there is an object blocking a direct wave, a delayed wave may be demodulated instead of the direct wave. In this case, several interfering waves due to multipath precede the wave to be demodulated. In the following, a system design will be described for the up-link transmission, which is technically more difficult, by assuming, for convenience, that the preceding waves are omitted (without loss of generality).

In the following, a case where only one user operates is considered. Transmitter TX modulates a spreading-sequence $g(i)=[c_0,c_1,c_2,...,c_{L-1}]$ with length L and period $T_D(=LT_c, T_c$: the chip time width) by a transmitting data b. This resultant modulated output s(i) modulates a chip waveform w(t) (normally a square waveform with a chip time width or a sampling function waveform of $\sqrt{f}$ characteristics is used.) to generate a baseband transmitting frame s(t). s(t) modulates a carrier wave $f_a$ to generate a radio-band transmitting wave $s_a(t)$. It is also assumed to transmit a modulated frame by the pilot-information $p$ instead of b synchronously or once in a while, without being subjected to interference due to the data-frames described above.

A received input $r_a(t)$ is applied to receiver RX at the base-station. Input $r_a(t)$ is obtained by adding noise to a signal which is made by giving attenuation and distortion to radio-band transmitting waveform $s_a(t)$, and it is converted into baseband received signal r(t) by a local carrier wave $f_a$ synchronized with transmitted carrier wave $f_a$. The attenuation and distortion added to the transmitting wave are compensated for by an equalizing circuit. Accordingly, if signal r(t) is assumed to be an output from the equalizing circuit, it may be expected that this signal contains the baseband transmitting wave as it is. It may be assumed that the transmitting wave generates M multipath delayed waves and that the frequency distortion is equalized (the attenuation of delayed waves is not compensated.). In a case where a shift-extended-frame, which will be described later, is used as spreading sequence, the baseband received wave is given by:

$$r^*(t)=r_f^*(t)+x(t) \tag{8}$$

$$r_f^*(t) = \sum_{m=0}^{M} i_m b g(t - mT_c) \tag{9}$$

where $r_f(t)$ denotes a received flock frame composed of the sum of the direct and delayed waves which have been generated by a transmitting wave (the flock frame is normally accompanied by a subscript f), and $\mu_m$ denotes the signal amplitude of the m-th delayed waveform, (m may take the negative value, but here it makes m a positive, for the convenience of the description) which is generally a complex due to the phase difference between the transmitted and received carrier wave. In the following description, the value for the desired station is normalized as $\mu_0 = 1$. $x(t)$ denotes an additive white Guassian noise and includes residues due to incompletely equalized distortion. Further, the mark * which shows the frame position of the direct wave in the received wave and denotes the components on the synchronously received frame with time width $T_D$.

Receiver RX generates a correlation output between input signal $r(t)$ and receiver chip waveform $w(t)$. This correlation output is a chip impulse sequence produced at successive chip period.

$$r^{\cdot}(i) = r_f^{\cdot}(i) + x(i)$$

$$r_f^{\cdot}(i) = \sum_{m=0}^{M} \mu_m bg(i-m) \qquad\qquad (10)$$

where i and m are used as the discrete-value representation of the time variable $t = iT_c$ and delay time $T_m = mT_c$, respectively.

The received frame as described above modulated by the transmitting data b is denoted by $r_D(i)$, and the received frame modulated by pilot signal $p$ instead of transmitting data b is denoted by $r_P(i)$.

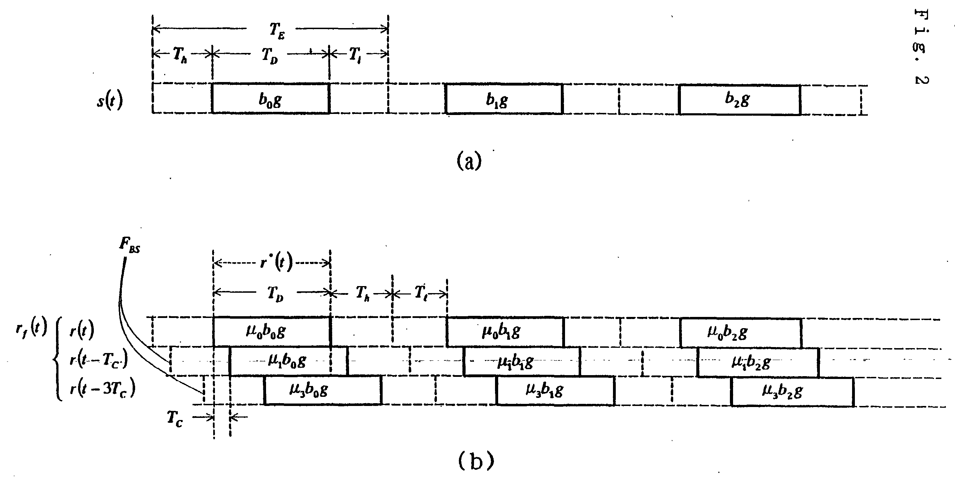

In the following, let us explain a frame composition of baseband transmitting and received signals used in the embodiment with Fig.2. Here, it is considered that one user $u_0$ transmits transmitting signal $s(t)$, and demodulates received signal $r(t)$ at a base-station. As shown in Fig.2(a), transmitting wave $s(t)$ is composed of a sequence of extended frames with an extended period $T_E$. The extended frame $E(i)$ has such a structure that a header (length $L_h$, time width $T_h$) and a tail (length $L_\ell$, time width $T_\ell$), are added to the front and the rear outsides of the core sequence $g(i)$ (length L, time width $T_D$). If the header and tail use a rear portion and a front portion of core sequence $g(i)$, a portion with time width $T_D$ on an arbitrary position of extended frame $E(i)$ becomes a cyclically shifted sequence of $g(i)$. In this case, extended frame $E(i)$ becomes a cyclically extended sequence. Let us call here $E(i)$ a shift extended sequence. User $u_0$ produces baseband output $s(t)$ by modulating respective extended sequences $E(i)$ with extended period $T_E$ by transmitting data $b_0, b_1, b_2, \cdots$, modulating a carrier wave by $s(t)$, and then transmits the resultant output output.

This transmitting signal generates multipath delayed waves in the transmission process. The received baseband waves including these delayed waves are shown in Fig. 2(b). The received signal is the sum of these waves. As described above, signal $r^*(i)$ with time width $T_D$ synchronized with a main wave in the received waves is called a synchronously received frame. This frame portion is extracted by synchronizing signal $e_R$. In this frame, a main wave $\mu_0 b_0 g(i)$ and the self-interference-waves [in the Figure are shown $\mu_1 b_0 g(i-1)$ and $\mu_3 b_0 g(i-3)$, and at this embodiment $\mu_2 = 0$ is assumed.] are contained. The following condition is set so that interferences waves on the adjacent frames do not get mixed in the synchronously received frame.

$$|\tau_{0k}| + (MT_c) < T_h, T_l$$

$$(k = 0, 1, 2,...K\text{-}1) \qquad\qquad (11)$$

where $\tau_{0k}$ indicates the timing deviation between the received waves from user $u_0$ and $u_k$. Then, if the relative transmitter timing for the transmitting frames is controlled by the base station, timing $\tau_{0k}$ can be restrained from taking an excessively large value. $MT_c$ indicates a delay time from the main wave to the M-th delayed wave, and the upper limit depends on the natural environment of the cell. Consequently, appropriate selection of time width $T_h$ enables so that $r^*(i)$ may not include a boundary $F_{BS}$ produced with the adjacent frames as shown in Fig.2(b). It also enables a demodulating operation be performed under such a quasi-synchronization condition. This is an inevitable condition required for avoiding the disturbance due to interfering wave components coming from other stations, which will be described later. A preceding wave (m<0) also becomes an interfering wave generally for a case in which the main wave is one of the delayed waves but not the direct wave. In this case, the tail $l$ plays a role so as to avoid the above-described disturbance. Here it is explained for the simplicity as $m \geqq 0$. Considering the existence of the preceding waves, let us here explain by assuming $T_1 = T_h$. All the interfering waves contained in the synchronously received frame are viewed as cyclically shifted sequences of the main wave, as long as the above-described quasi-synchronization condition is maintained.

That is to say that the odd-correlation output is not generated in the matched filter output in a demodulation process, since there is no influence caused by adjacent frames.

Now, consider a case in which a synchronously received pilot-flock-flame is applied to a matched filter that matches to core sequence g(i), the matched filter output is represented as follows.

$$\Lambda_f(j) = r_{Pf}^{\cdot}(i) * \overline{g\ (i)} = \sum_{s=0}^{L-1} p_s \delta(j-s)$$

$$p_s = \sum_{m=0}^{M} \mu_m \lambda^m(s)$$

$$\lambda^m(j) = \frac{1}{L} \sum_{i=0}^{L-1} c_i \overline{c_{i+m-j}} \qquad (j+m-j : mod\ L)$$

(12)

Where $\lambda^m(j)$ denotes the (m-j)-th shift auto-correlation value of q(i), and $p_s$ denotes the value which represents an element on the 0-th row of a coefficient matrix P to be mentioned later.

Now, the first embodiment of the present invention is described. Let us consider four binary complementary sequences with sequence length 4 shown below, instead of the one spreading sequence g(i) as described above.

$$\begin{cases} A_0 = (+ \quad + \quad + \quad -) \\ A_1 = (+ \quad - \quad + \quad +) \end{cases} \begin{cases} B_0 = (+ \quad + \quad - \quad +) \\ B_1 = (+ \quad - \quad - \quad -) \end{cases}$$

Each of these sequences is applied to a matched filter that matches to the sequence itself and to another matched filter that matches to the associated sequence of the other group, to obtain both-side correlation-functions. Using these outputs, the following added correlation-functions are obtained where j is the shift variable.

$$\ddot{E}_{(A)}(j) = A_0 * \overline{A_0} + A_1 * \overline{A_1} = \sum_{s=-3}^{3} p_{AS} \ddot{d}(j-s)$$

(13)

$$\ddot{E}_{(B)}(j) = B_0 * \overline{B_0} + B_1 * \overline{B_1} = \sum p_{BS} \ddot{d}(j-s)$$

(14)

$$\ddot{E}_{(B/A)}(j) = B_0 * \overline{A_0} + B_1 * \overline{A_1} = \sum_{s=-3}^{3} p_{CS} \ddot{d}(j-s)$$

(15)

$$\ddot{E}_{(A/B)}(j) = A_0 * \overline{B_0} + A_1 * \overline{B_1} = \sum_{s=-3}^{3} p_{DS} \ddot{d}(j-s)$$

(16)

If the above set of sequences $[(A_0,A_1),(B_0,B_1)]$ are complete complementary sequences, then the values of the right side are given as follows.

$$p_{AS} = p_{BS} = 2\mu_0\lambda^0(s) = 2 \qquad (s = 0)$$
$$= 0 \qquad (s \neq 0)$$
$$\left.\begin{array}{l}\\ \\ \\ \\ \end{array}\right\} \qquad (17)$$
$$p_{CS} = p_{DS} = 0 \qquad \vdots$$

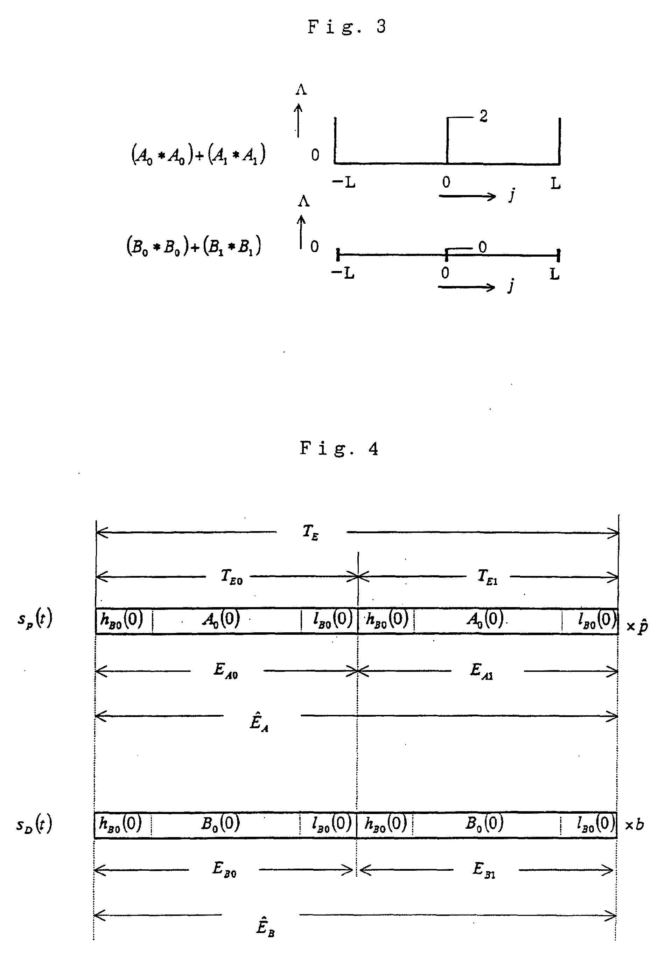

Then, since the 0-shift-value (s = 0) of $P_{AS}$ is the sum of the respective 0-shift auto-correlations of $A_0$ and $A_1$, it takes 2, assuming the received voltage $\mu_0$=1. Figure 3(a) shows the characteristics.

On the other hand, since $P_{cs}$ is the sum of the cross-correlation-functions between $B_0$ and $A_0$ and between $B_1$ and $A_1$, both the functions cancel each other, taking 0 at all the shifts as shown in Fig.3(b).

From the view point of utilizing the property of the complementary sequences, extended sequences $E_{A0}$ and $E_{A1}$ with sequence length $L_E$ such as shown below are considered.

$$E_{A0} = (h_{A0}\ A_0\ l_{A0})$$

$$E_{A1} = (h_{A1}\ A_1\ l_{A1})$$

$$L_E = L_h + L + L_l \qquad (18)$$

The following sequence will be obtained by arranging the above extended sequences in cascade on a time-axis. $\hat{E}_B$ can also be obtained by the similar manner.

$$\hat{E}_A = (E_{A0}, E_{A1})$$

$$\hat{E}_B = (E_{B0}, E_{B1})$$

In order to distinguish the component sequences $h_{A0}$, $A_0$ of $E_{A0}$ etc. from cyclically shifted sequences to be mentioned later, $\hat{E}_A$ is shown in Fig. 2 by the method of displaying $h_{A0}(0)$ and $A_0(0)$ etc.

Transmitter TX multiplies the pilot-information p(= 1) to these vertical sequences $\hat{E}_A$, and then uses the resultant output to modulate carrier wave with frequency $f_0$ (it is denoted by $f_0$), thus producing the transmitting frame given by the following equation shown in Fig.4. The transmitting frame is then sent out by transmitter TX.

$$s_P(t) = \left[ p\hat{E}_A / f_0\ \right] \qquad (19)$$

First, assuming that there is no multipath (M=0) in the transmission process. Receiver RX demodulates only the synchronously received wave $r_P^*(i)$ in the received direct wave $r_P(t)$ corresponding to transmitting frame $s_P(t)$, and this output is demodulated by the local carrier wave $f_0$ (wave $r_P^*(i)$ is multiplied by carrier wave $f_0$ to produce the low-frequency component thereof) and the following chip output impulse sequence $r_P(i)$ which is obtained by correlative demodulation with chip waveforms, is produced,

$$r_P^*(i) = [s_P^*(t)]\,f_0$$

$$= [\,p\hat{E}_A^* / f_0\,]\,f_0 = [\,pE_{A0}^* / f_0\,]\,f_0 + [\,pE_{A0}^* / f_0\,]\,f_0 \qquad (20)$$

$$= pA_0 + pA_1$$

where the mark * denotes the frame part with period $T_D$ for demodulation included in the synchronously received wave, and $[\ ]_{f0}$ denotes demodulation done by carrier wave $f_0$. It is further assumed that attenuation occurs during transmission is compensated for by receiver RX. The output $(pA_0)$ obtained by demodulating the front part $r_{P0}(i)$ of $r_P(i)$ and the output $(pA_1)$ by demodulating the rear part $r_{P1}(i)$ of $r_P(i)$ are applied to matched filters MF $(A_0)$ and MF $(A_1)$ which match to sequences $A_0$ and $A_1$ respectively. If these outputs $\Lambda_{A0}(j)$ and $\Lambda_{A1}(j)$ are added simultaneously, its resultant output is $\Lambda_A(j)$ which denotes the sum between the auto-correlation-function of $A_0$ and the auto-correlation-function of $A_1$. This is the characteristic in Eq.(13), (14) and Fig.3(a). Since $r_{P0}(i)$ is preceded by $r_{P1}(i)$ and the output of MF $(A_0)$ is preceded by the output of MF $(A_1)$, before both the outputs are added, the former output should be delayed by the extended frame period $T_E$. This operation is here expressed as the simultaneous adding. This relationship is also represented by the following equations.

$$
\begin{aligned}
A_A^0(j) &= A_{A0}^0(j) + A_{A1}^0(j) \\
&= \sum_{s=0}^{L-1} p_{PS}\, \delta(j-s) \\
p_{PS} &= 2\mu_0 \lambda(s) = 2 \qquad (s=0) \\
&= 0 \qquad\qquad\ (s \neq 0)
\end{aligned}
\qquad\qquad (21)
$$

It should be noted that the actual received wave is composed of a direct wave and M delayed waves as shown by Eq. (10) and is represented as $r_{Pf}(i)$. Thus, the actual correlation-function-output including similar correlation outputs $\Lambda^m$ (j) for the m-th delayed waves is given by, considering the white noise:

$$
\begin{aligned}
\Lambda_{pf}(j) &= \sum_{m=0}^{M} 2\mu_m \Lambda_A^m(j) + \varepsilon_p = \sum_{s=0}^{L-1} p_s \delta(j-s) + \varepsilon_p \\
p_s &= 2\mu_m \qquad\qquad (s=m)
\end{aligned}
\qquad\qquad (22)
$$

where $\varepsilon_P$ denotes the noise-related component, $\mu_0$ denotes the received direct wave voltage and $\mu_m (m \neq 0)$ denotes the received delayed wave voltage.

On the other hand, transmitter TX multiplies the transmitting data $b_0$ by the above-described cascaded sequence $\hat{E}_B$, and then modulates carrier waveform $f_0$ by the resultant output, thus producing a transmitting frame given by the following equation, that is also shown in Fig.4.

$$
s_D(t) = [b_0 \hat{E}_B / f_0] \qquad\qquad (23)
$$

Transmitter TX transmits this frame on the same time slot as the above-described $s_P(t)$. Receiver RX extracts the baseband synchronously received waveform $r_D^*(i)$ on the same time slot as $s_P^*(i)$. In a case without multipath, based on the similar principle described above, the extracted component is given by,

$$
\begin{aligned}
r_D^*(i) &= [b_0 \hat{E}_B^* / f_0] f_0 = [b_0 E_B^* / f_0] f_0 + [b_0 E_B^* / f_0] f_0 \\
&= b_0 B_0 + b_0 B_1 \quad .
\end{aligned}
\qquad\qquad (24)
$$

If the front part $r_0^*(i)$ of $r_D^*(i)$ and the rear part $r_1^*(i)$ of $r_D^*(i)$ are applied to matched filters MF $(B_0)$ and MF $(B_1)$ which

match to sequences $B_0$ and $B_1$ respectively, the correlation outputs $\Lambda_{B0}(j)$ and $\Lambda_{B1}(j)$ are obtained. These are added simultaneously by the same manner described above. It results

$$\Lambda_B^0(j) = \Lambda_{B0}^0(j) + \Lambda_{B1}^0(j)$$
$$= b_0 \sum p_{BS} \delta(j - s)$$
$$p_{BS} = 2\mu_0 \lambda(s) = 2 \quad (s = 0)$$
$$= 0 \quad (s \neq 0) \; . \tag{25}$$

Consequently this added output takes $2b_0$. In a case of the existence of multipath, the simultaneously added output of matched filters MF ($B_0$) and MF ($B_1$) is given by,

$$\Lambda_{Df}(j) = \sum_{m=0}^{M} 2b_0 \mu_m \Lambda_B^m(j) + \varepsilon_D = \sum_{s=0}^{L-1} p_s \delta(j - s) + \varepsilon_D$$
$$p_S = 2\mu_m \quad (s = m) \; . \tag{26}$$

This is almost $b_0$ times as much as the pilot output in Eq.(22). $\varepsilon_D$ denotes the noise related component.

The received frame r(i) is composed of its front part $r_0(i)$ and rear part $r_1(i)$, when the pilot frame $s_P(t)$ and the data frame $s_D(t)$ are transmitted on the same time slot. These parts include both the frame components so as to be added. Consequently, these are given by,

$$r^*(i) = r_0^*(i) + r_1^*(i)$$
$$r_0^*(i) = \hat{p}(A_0 + A_1)$$
$$r_1^*(i) = b_0(B_0 + B_1) \; . \tag{27}$$

Hence the actual components applied to the matched filters are

$$\hat{p}A_0 + b_0 B_0 \rightarrow MF(A_0), MF(B_0)$$

$$\hat{p}A_1 + b_0 B_1 \rightarrow MF(A_1), MF(B_1).$$

Therefore, though the simultaneously added output of matched filters MF ($A_0$) and MF ($A_1$) contains the component of the sum of cross terms $B_0{}^*\bar{A}_0$ and $B_1{}^*\bar{A}_1$, it takes 0 due to the relationship given by Eq.(15). Cross terms contained in the simultaneously added output of the outputs of matched filters MF ($B_0$) and MF ($B_1$) also takes 0 due to the relationship given by Eq.(16). Consequently even if $s_P(t)$ and $s_D(t)$ are transmitted simultaneously, the outputs of Eq. (22) and Eq.(26) obtained when both are transmitted separately do not change. That is to say, both components can be produced separately. Considering the noise related correlation output components $\varepsilon_P$ and $\varepsilon_D$ included in the received frame $r^*(i)$, the estimate $\tilde{b}_0$ of the transmitted data $b_0$ is obtained by the following equation.

$$\tilde{b}_0 = \frac{\Lambda_{Df}(j)}{\Lambda_{Pf}(j)} = b_0 + \varepsilon \tag{28}$$

$\varepsilon$ is the deviation given by $\varepsilon_P$ and $\varepsilon_D$.

Then, let us explain such a method that transmitter TX transmits L transmitting data $b_n$ (n = 0,1,2,...N-1) by the same method as described above, using cyclically shifted complementary sequences ($B_0$, $B_1$).

Let us define the cyclically shifted sequence. $B_0$ is here expressed as $B_0(0)$, and a sequence which is made by cyclically shifting $B_0(0)$ by n chips is described as $B_0(n)$. With the similar expression, extended sequences using the n-shift cyclically shifted sequences are represented by the following equations.

$$E_{B0}(n)=[h_{B0}(n),B_0(n),l_{B0}(n)]$$

$$E_{B1}(n)=[h_{B1}(n),B_1(n),l_{B1}(n)]$$

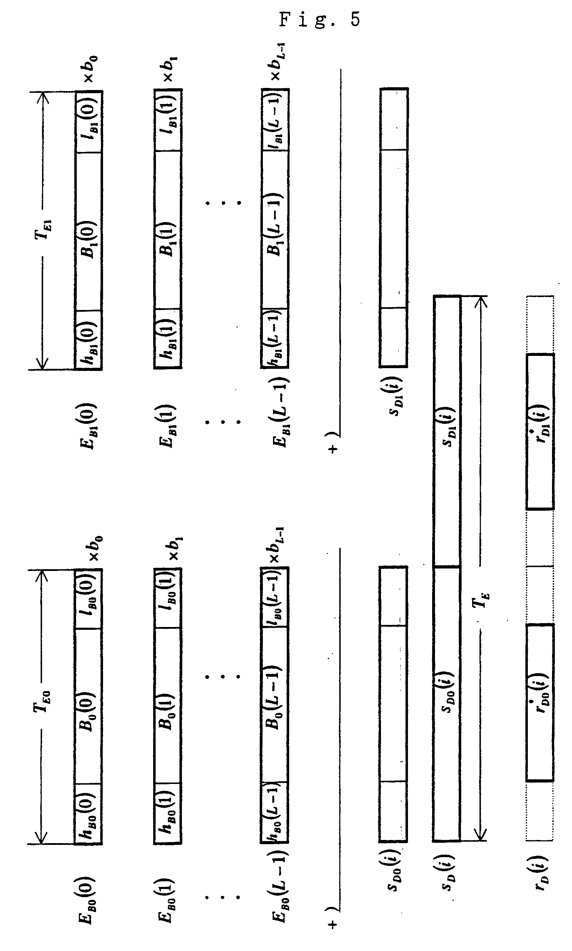

In general, a sequence made by shifting sequence $B_0(0)$ by n chips, its multichips of the left side portion denoted by $l_{B0}(n)$, and its multichips of the right side portion denoted by $h_{B0}(n)$ are prepared, and by arranging these sequences in the above-described order, sequence $E_{B0}(n)$ is obtained. L frames are made by multiplying the transmitting data $b_n$ by sequence $\hat{E}_B(n)$ which is made by arranging $E_{B0}(n)$ and $E_{B1}(n)$ in cascade, and then they are synthesized as shown in Fig.5. A transmitting data-frame thus produced is expressed by,

$$\left. \begin{aligned} s_D(t) &= \sum_{n=0}^{L-1} s_{Dn}(t) \\ s_{Dn}(t) &= [b_n E_{B0}(n)/f_0] + [b_n E_{B1}(n)/f_0] = [b_n \hat{E}_B(n)/f_0] \quad . \end{aligned} \right\} \quad (29)$$

L transmitting data-frames are sent using the same time zone and the same frequency slots as those of pilot frame $s_p(t)$.

Here, let us assume a transmission line which generates multipath waves. Receiver RX receives the following received waves which are the sum of the pilot-frame, the L data-frames and all of the delayed waves generated by the respective frames.

$$\left. \begin{aligned} r^*(i) &= r_{Pf}^*(i) + r_{Df}^*(i) + x(i) \\ r_{Df}^*(i) &= \sum_{n=0}^{L-1} r_{Dnf}(i) \\ r_{Dnf}(i) &= \sum_{m=0}^{M} b_n \mu_m r_{Dn}(i-m) \end{aligned} \right\} \quad (30)$$

where $r_{Pf}^*(i)$ and $r_{Df}^*(i)$ denote the pilot-flock-frame and the data-flock-frame. The respective demodulated outputs of $r_{Pf}^*(i)$ and $r_{Df}^*(i)$ of $r^*(i)$ can be separated by the above-described principle. $r_{Df}^*(i)$ consist of the L components $r_{Dnf}^*(i)$. $r_{Dn}(i-m)$ is the waveform which is obtained by cyclically shifting $b_n \hat{E}_B(n)$ in Eq.(29) by $mT_c$. When $r_0^*(i)$ and $r_1^*(i)$ composing the synchronously received input $r^*(i)$ are applied respectively to the filters MF($B_0$) matched to sequence $B_0$ and MF($B_1$) matched to sequence $B_1$ to generate an output, this output $\Phi(j)$ is the sum of component $\Phi_j$ which is made by synthesizing L pieces of correlation function output $\Lambda_{Dnf}(i)$, each is obtained by multiplying $b_n$ by $\Lambda_{Pf}(i)$ in Eq.(22), and component $\phi_j$ corresponding to the white noise related correlation output $\varepsilon_D$.

$$\left. \begin{aligned} \Lambda_{Dnf}(j) &= \sum_{s=n}^{n+L-1} b_n p_s \delta(j-s) + \varepsilon_D \qquad (n+L-1: \ mod \ L) \\ \Phi(j) &= \sum_{n=0}^{L-1} \Lambda_{Dnf}(j) = \sum_{s=0}^{L-1} (\Phi_j + \phi_j)\delta(j-s) \end{aligned} \right\} \quad (31)$$

Defining pilot-response matrix P, unknown matrix $\tilde{b}$, and data-response matrix $\Phi$ as shown below based on the above outputs, the following system of L linear equations L unknowns are derived,

$$[P][\tilde{b}]=[\Phi]$$

$$\begin{pmatrix} p_0 & p_{L-1} & \cdots & p_1 \\ p_1 & p_0 & \cdots & p_2 \\ \\ p_{L-1} & p_{L-2} & \cdots & p_0 \end{pmatrix} \begin{pmatrix} \tilde{b}_0 \\ \tilde{b}_1 \\ \\ \tilde{b}_{L-1} \end{pmatrix} = \begin{pmatrix} \Phi_0 + \phi_0 \\ \Phi_1 + \phi_1 \\ \\ \Phi_{L-1} + \phi_{L-1} \end{pmatrix} \right\} \qquad (32)$$

where $\tilde{b}$ denotes the sum of the correct transmitted data $b_n$ and a white noise related error. The n-th unknown $\tilde{b}_n$ is solved and the solution is then made in hard-decision to obtain the detected output $b_n$.

Here, pilot-response can be transmitted reliably by means of increasing the electric power of the pilot-frame so as to disregard the effect of $\varepsilon_P$ in Eq.(22). Consequently, here $p_s$ is assumed not to contain the error.

By the method above-described, pilot information $p$ and L bit transmitting data per user can be transmitted using 2 extended frames with length $T_E$ without disturbed by self-interference due to multipath.

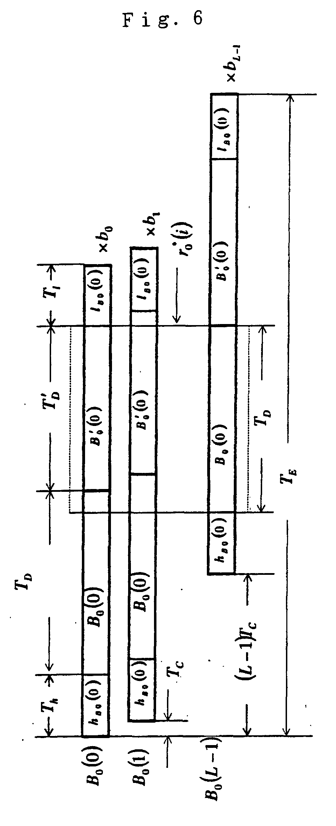

In the manner above-described, although it uses $E_{B0}(n)$ as the cyclically shifted sequence, the sifted sequence of $E_{B0}(n)$ by n chips can be used by taking sufficiently long I(n). The waveform of the data-frame is shown in Fig.6. Each of L frames is arranged in the time position shifted by 1 chip from the preceding frame. Since the actual tail is the sum of $B_0'(0)$ and 1(0) in the figure, $T_E$ becomes longer by $(L-1)T_c$ than the case in Fig.5. $E_{B1}(n)$ is also generated similarly. In this case, the similar result above-described can be obtained by the manner that receiver RX extracts a frame on the position equivalent to $r_0^*(i)$ in the figure as the front part of the synchronously received frame. This is called chip shift multiple system as contrasted with the cyclically shift multiple system.

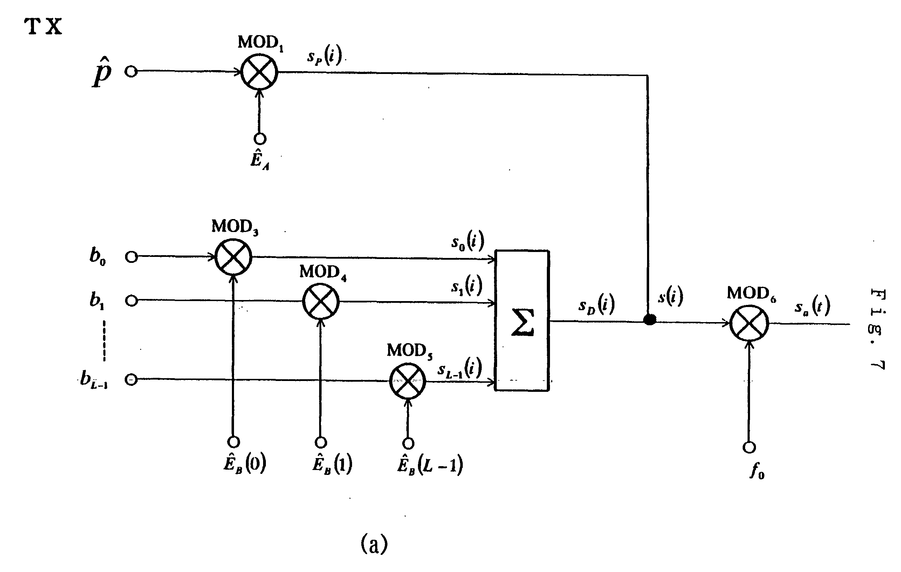

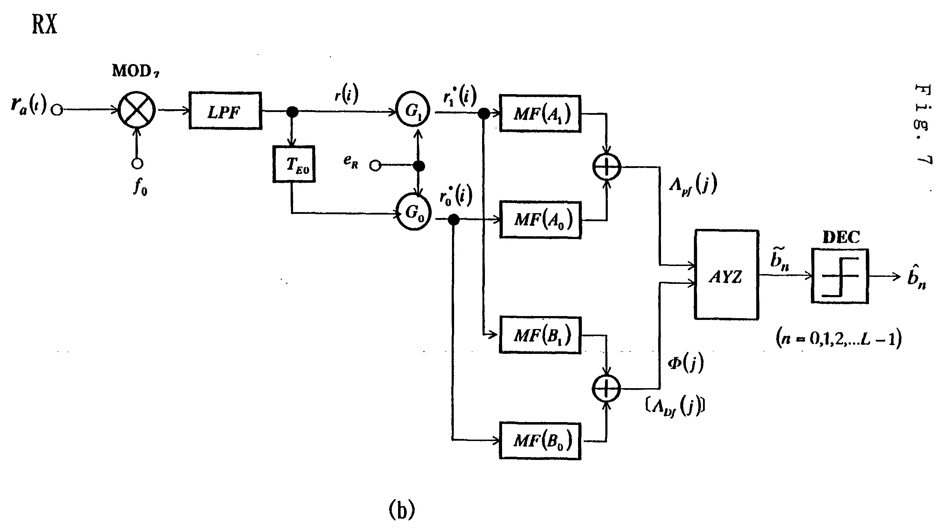

Figure 7 shows a circuit block diagram of the transmitter and the receiver according to the first embodiment. In Fig.7(a), symbols $MOD_1$ to $MOD_6$ denote modulators and $\Sigma$ denotes the synthesizer (adder) of the signal. The cascaded sequence $\hat{E}_A$ shown in Fig.4 and $\hat{E}_B$ shown in Fig.5 [a sequence which is made by arranging $E_{B0}(n)$ and $E_{B1}(n)$ in cascade in Fig.5] are prepared beforehand. Figure 7(a) shows a circuit of transmitter TX. At modulator $MOD_1$, the pilot information $p$ modulates $\hat{E}_A$, and generates pilot-frame $s_P(i)$ on the baseband. On the other hand, at modulators $MOD_3$ to $MOD_5$, the transmitting data $b_0$, $b_1$ and $b_{L-1}$ modulate $\hat{E}_B(0)$, $\hat{E}_B(1)$ and $\hat{E}_B(L-1)$ respectively, generating transmitting data-sub-frames $s_0(i)$, $s_1(i)$ and $s_{L-1}(i)$. Synthesizer $\Sigma$ synthesizes these L sub-frames, to generate a transmitting data frame $s_0(i)$. $s_P(i)$ and $s_0(i)$ are the impulse sequences, and both are added to make a transmitting frame $s(i)$.

$s(i)$ is multiplied by a chip waveform which is omitted to illustrate. At modulator $MOD_6$, the transmitting frame on the baseband modulates a carrier wave $f_0$, and generates a transmitting frame $s_a(t)$ on the radio-band. $s_a(t)$ is transmitted.

Figure 7(b) shows a circuit of receiver RX. At modulator $MOD_7$, a received input $r_a(t)$ corresponding to $s_a(t)$ is demodulated by the local carrier wave $f_0$, and the resultant output is converted into the received wave $r(t)$ on the baseband by passing the demodulated output through a low-pass filter LPF. $r(t)$ becomes the received frame $r(i)$ which consists of a chip impulse sequence by the correlative demodulation with the chip waveform which is omitted to illustrate.

$r(i)$ is applied to gate $G_0$ after a delay time of $T_{E0}$ second given by the delay circuit $T_{E0}$ illustrated. Thus the central part of the front part of $r(i)$ is extracted by a synchronizing signal $e_R$ [the frame on the position corresponding to $r_{D0}^*(i)$ contained in $r_D(i)$ in Fig.5]. This part becomes $r_0^*(i)$. On the other hand, $r(i)$ is added to gate $G_1$ directly, and the central part of the rear part of $r(i)$ is extracted by $e_R$ [the frame on the position corresponding to $r_{D1}^*(i)$ in Fig.5]. This part becomes $r_1^*(i)$. These synchronously received frames $r_0^*(i)$ and $r_1^*(i)$, respectively, consist of the sum of the central parts of the front parts of the pilot-flock-frame and data-flock-frame, $r_{P0f}^*(i)$ and $r_{D0f}^*(i)$, and the sum of the central parts of the rear parts of the both flock-frames, $r_{P1f}^*(i)$ and $r_{D1f}^*(i)$.

$r_0^*(i)$ is applied to a matched filter $MF(A_0)$ that matches to $A_0$, on the other side, $r_1^*(i)$ is added to a matched filter $MF(A_1)$ that matches to $A_1$ as illustrated. Outputs of both the matched filters are simultaneously added, to produce the correlation-function output $\Lambda_{Pf}(j)$[Eq.(22)]. On the other hand, $r_0^*(i)$ and $r_1^*(i)$ are also added to similar filters $MF(B_0)$ and $MF(B_1)$. The simultaneously added output of these filter outputs is $\Lambda_{Df}(j)$ given by Eq.(26) if transmitted frame $S_D(i)$ consists of $b_0\hat{E}_B(0)$. However, the simultaneously added output above-described will become $\Phi(j)$ in Eq.(31) as illustrated, if $s_D(i)$ is the sum of L frames of $b_n\hat{E}_B(n)$.

Here let us explain the general case taking the latter. Pilot-response $\Lambda_{Pf}(j)$ and data-response $\Phi(j)$ are applied

to analyzing circuit AYZ. AYZ generates pilot-response matrix P based on $\Lambda_{Pf}(j)$, and solves Eq.(32) using $\Phi(j)$ and generates unknown $\tilde{b}_n$. Unknown $\tilde{b}_n$ is made in hard-decision by decision circuit DEC to detect output $b_n$. In this case, the $L$ transmitting data are detected in a demodulation process for one received frame $r(i)$. Furthermore, a generating circuit of synchronizing signal $e_R$ is omitted to explain here.

The frequency utilization-efficiency of the present system can be expressed by the number of chips $\nu$ which is required to transmit 1 bit.

$$\nu = \frac{\text{the number of chips in a cascaded sequence}}{\text{the amount of transmitted information}} = \frac{2(L_h + L + L_l)}{L} \tag{33}$$

The smaller the scale $\nu$ is, the more advantageous the present system is. $L_h/L$ and $L_l/L$ is determined by the information rate $f_D$ and the size of a cell. Let us set the delay time of the delayed waves to 2μsec by assuming that $f_D$=10$kbps$, the cell radius is 1 km, and its propagation time 3μsec. As a consequence, $T_h=T_1$=2μsec and $2(T_h+T_D+T_1)$ =$T_E$=1/$f_D$=100μsec are obtained. In this case $T_D$ =46μ sec and $\nu \doteqdot$2.2chip/bit. This is equivale to 3 to 5 times higher the efficiency than 6 to 10 chips per 1 bit, that is a value of a practical system such as a commercialized system CDMA-one. In the above-described system, it is possible that 1 frame of the N multiple pilot-frames $s_P(i)$ is transmitted and the other ($N$ -1) pilot-frames are used for data-frames, because the pilot response does not change rapidly. The value of $N$ decreases, as the transmission data rate reduces, and as the user moving speed increases. Therefore, N can be made larger in case of the high data rate transmission. By setting N>>1, then the value of $\nu$ in Eq.(33) reduces to about a half.

The value of $\nu$ increases and the efficiency reduces, because $T_E$ increases as twice as $T_D$ illustrated, when the chip shift multiple system is used. However, when this frame composition is used, covolvers can be used instead of matched filters.

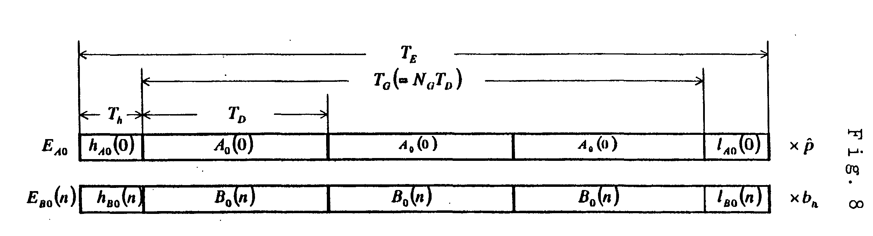

Now, consider, as the second embodiment, a system that $K$ users transmit their signals simultaneously. For this case, an example of the extended sequences $E_{A0}$ for pilot and $E_{B0}(n)$ for data used by each user is shown in Fig. 8. A central sequence with time width $T_G$ is made by repeating core sequence $A_0(0),[B_0(n)]$ K(=3) times. Extended sequence $E_{A0},[E_{B0}(n)]$ is composed so that the previously stated header $h(0)$ and tail $l(0)$ may be added to the central sequence. Receiver $RX$ extracts the frame part corresponding to $T_G$ as $r_0^*(i)$. The spectrum of $K$ times repeated sequence extracted occupies only the $L$ comb slots in $KL$ one-sided frequency slots. Consequently the other $(K-1)L$ frequency slots are vacant.

Here let us define the orthogonal frequency $f_k$.

$$\left. \begin{array}{l} f_k = f_0 + k f_G \\[8pt] f_G = T_G^{-1} \end{array} \right\} \tag{34}$$

The k-th user produces $\hat{E}_A(0)$ and $\hat{E}_B(n)(n$=0,1,2,...$L$-1) using $E_{A0}$, $E_{A1}$, $E_{B0}(n)$ and $E_{B1}(n)$ which are produced by the manner shown in Fig.8. $P_k$ and $b_k$ modulate $\hat{E}_A(0)$ and $\hat{E}_B(n)$ respectively, and the transmitting frame is produced by the resultant outputs. The above-described orthogonal wave $f_k$ is modulated by the frame and the modulated output is thus transmitted. The components of respective users contained in $r_0^*(i)$ and $r_1^*(i)$ which are extracted by receiver $RX$ occupy the individual comb spectrum with $L$ slots so that they can be demodulated without generating cross interference by the following method..

For example, the receiver input frame $r_a(t)$ is demodulated by the carrier wave $f_0$ to produce impulse sequence $r_0(i)$, when receiver RX demodulates and detects data $b_{0n}$ transmitted from $u_0$. Synchronously received frames $r_0^*(i)$ and $r_1^*(i)$ are extracted by synchronizing signal $e_R$, and they are applied to matched filters $MF(KA_0)$, $MF(KA_1)$, $MF(KB_0)$ and $MF(KB_1)$ to obtain pilot response $\{p\}_0$ and $\{\Phi\}_0$, thereby estimated value $\tilde{b}_{0n}$ of the data can be derived based on the above-described principle. Thus, the synchronous reception of $K$ users' signals and the $L$ data detection per user can be achieved. In this case, there is no cross-interference between demodulated signals of respective users, as long as the condition of Eq. (11) is maintained, even if a little time difference [$\tau_{0K}$ denoted in Eq.(11)] exists between the received waves from respective users. Although the number of chips of the cascaded sequence increase 3 times, the period $T_E$ of the symbol-frame is constant as given by the information rate, and the required transmission bandwidth becomes 3 times larger than the case of $k$=1. Since the number of users are $k \to 3$, the total transmission capacity of the whole system becomes 3 times. Therefore, the value $\nu$ of Eq.(33) is invariant. That is to say, such a system that accommodates a large number of users at the same frequency-utilization-efficiency can be constructed.

Fig.9 shows a circuit block diagram of a transmitter and a receiver according to the second embodiment. Figure 9(a) is the transmitter, and $TX_E$ in the figure is the circuit [on condition that the repeated sequences are used for $\hat{E}_A$ and $\hat{E}_B(n)$] of Fig.7(a) where $MOD_6$ is removed. That is to say, the k-th user transmitter produces a transmitting frame $s_{ak}(t)$ on the carrier wave $f_k$, and transmits it. These frames are admixed in space to make a radio transmitting frame $s_a(t)$.

Fig.9(b) is the base station receiver, and $RX_B$ in the figure is the circuit [on condition that a circuit matching to repeated sequence $KA_0$, etc. are used as MF.] of Fig.7(b) where $MOD_7$ is removed. In order to demodulate the data has $u_k$ sent out, received frame $r_a(t)$ corresponding to $s_a(t)$ is led to modulator $MOD_7$ to which $f_k$ is supplied and the similar demodulating operation as Fig.7(b) is performed at $RX_B$. The system accommodating $K$ users described above can be constructed by such a transmitter and a receiver as explained here.

In the above-described description, it is possible to use multi-value, real number or complex (polyphase) sequences with the complementary characteristics, though binary sequences have been used so for as the spreading-sequences. The similar function can be performed using not only the complementary sequences of 2 sequences $\times$ 2 sets but also the plural sequence set like 4 sequences $\times$ 4 sets, etc. There is an advantage the accuracy of a D/A converter placed at the transmitter output side and an A/D converter placed at the receiver input side can be mitigated when complementary sequences with canceling effect of the correlation outputs are used.

Furthermore, although the examples using the complementary sequences are explained as the main subject here, an arbitrary selected sequence (for example, an $M$ sequence) as the spreading sequence can be used for the pilot-frame ($F_P$) and the data-frame ($F_D$) at transmitter. That is to say, a cascaded sequence is made by using the two frames above-described are transmitted, and it is sent out. Here, $F_D$ is a sum of L frames produced by using the cyclically shifted sequences. This is extracted in time division manner as separate frames at the receiver, and using the former the pilot-response $\Lambda_{Pf}$ or $\Phi$ is obtained. In this case, element $p_s$ of $\Lambda_{Pf}$ does not take the simple expression ($p_s=2\mu m$) shown in Eq.(26). But L $p_s$ can be obtained as the correlation output between the above-described M sequence and the pilot-frame. $\tilde{b}_n$ and $\tilde{b}_n$ can be obtained based on the above-described principle, if a pilot matrix Pis produced with response $\Lambda_{Pf}$. Moreover although the transmission data $b$ has been assumed to take a binary, it is also possible to transmit data having a multi-value or a complex number.

In addition, it is also possible to use $L$ difference kinds of sequences $g_l(i)= [l = 0,1,2,...L-1]$ with sequence length L generally, instead of using the above-described cyclically shifted sequences as the core sequences constituting $F_D$. In this case, the analyzing sequence $\hat{g}_0(i)$(generally it is a real number sequence) which is orthogonal with $g_0(i)$ except at the 0 shift is obtained, when adopting $g_0(i)$ as the core sequence for the pilot-frame. The pilot responses calculates $p_{l0}$, $p_{l1}$, $p_{l2}$,... corresponding to other sequence $g_l(i)(k\neq0)$ to produce the pilot matrix P by these responses, when it uses the pilot responses $P_{00}$, $p_{01}$, $p_{02}$,... which are obtained by applying this pilot-frame to matched filter MF $[\hat{g}_0(i)]$. Consequently, the multiple communication systems can be constructed based on the above-described principle.

As described above, the present invention is characterized by that a transmitter transmits a signal which conveys multiplexed data put on cyclically shifted or chip shifted spreading sequences made by using one set of complementary sequences, or put on mutually different sequences, and a receiver can separate and discriminate the multiplexed data, based on, for instance, received pilot responses of pilot frames made by using, for instance, the other set of the complementary sequences. Moreover, a system using optional sequences instead of the complementary sequences or another system using the mutually different sequences instead of the cyclically shifted sequences can be constructed. Consequently, the frequency-utilization-efficiency can be increased compared with conventional CDMA systems. When the present invention is applied to mobile communications systems, radio LANs, etc., it is very effective in increasing the capacity of the systems by improving the frequency-utilization-efficiency.

**Claims**

1. A cyclically shifted code division multiple access communications system is **characterized, in** a direct-sequence spread-spectrum CDMA communications system that each transmitter comprises a function of generating extended sequences which are composed by arranging a rear and a front portions of a core-spreading-sequence or zero sequences respectively at the front and the rear outsides of the core-spreading-sequence as guard-sequences,

a function of modulating the extended sequences with transmitting information to produce a transmitting data-frame,
a function of modulating the extended sequences with pilot information to produce an isolated pilot-frame that is not affected by data-frames and pilot-frames transmitted by the other transmitters, and
a function of transmitting data and isolated pilot-frames; and
a receiver comprises a function of receiving a synchronously received data-flock-frame on a position synchronized with the core-sequence in the extended sequence coming from the desired station,

a function of receiving a similar synchronously received isolated pilot-flock-frames,

a function of analyzing both the flock-frames, generating the received data-response and pilot-response,

the transmitter comprises means of generating the 4 extended sequences $E_{A0}$, $E_{A1}$, $E_{B0}$ and $E_{B1}$ using a set $(A_0, A_1)$ of the auto-complementary sequences with sequence length L chips composed the complete complementary sequences having the complete complementary characteristics each other and another similar set $(B_0, B_1)$,

means of generating a transmitting pilot frame $s_P$ made by multiplying a cascaded sequence $\hat{E}_A$ composed of the extended sequences $E_{A0}$ and $E_{A1}$ by a pilot information $p$, generating a transmitting frame $s_D$ made by multiplying a cascaded sequence $\hat{E}_B$ composed of the extended sequences $E_{B0}$ and $E_{B1}$ by a data b, synchronously adding both the multiplied outputs to produce a symbol frame, and transmitting a carrier wave modulated by said frame, and

the receiver comprises means of applying a front portion $r_0$ of the synchronously received baseband frame demodulated by above-described carrier wave to a filter $M(A_0)$ that matchs to $A_0$, applying a rear portion $r_1$ of the synchronously received frame to a filter $M(A_1)$ that matches to $A_1$, and generating a pilot-response matrix $\{p\}$ corresponding to pilot information $p$ by adding both the matched filter outputs synchronously,

means of applying front portion $r_0$ and rear portion $r_1$ of the synchronously received frame to similar matched filters $M(B_0)$ and $M(B_1)$ respectively, and generating the received data-response-matrix $\Phi$ corresponding to the data b by adding those outputs synchronously,

means of generating an estimate $\tilde{b}$ of the transmitted data from which the influence of the preceding or delayed waves due to multipath is removed, using pilot response $\{p\}$ and received data response matrix $\Phi$, and means of detecting the transmitted data $b$ by making estimate $\tilde{b}_x$ on the hard-decision.

2. A cyclically shifted code division multiple access communications system according to claim 1 is **characterized in that** the transmitter comprises means of generating cascaded sequence $\hat{E}_B(n)$ made of extended sequences $E_{B0}(n)$ and $E_{B1}(n)$ which are obtained by cyclically shifting extended sequences $E_{B0}$ and $E_{B1}$ by $n(=0,1,2,...L-1)$ chips, producing a transmitting frame $s_n$ by multiplying cascaded sequence $\hat{E}_B(n)$ by data $b_n$, producing a transmitting symbol frame by adding L pieces of $s_n$ and pilot frame $s_P$ according to claim 1 synchronously, and transmitting a carrier wave modulated by said transmitted symbol frame, and

the receiver comprises means of applying front portion $r_0$ and rear portion $r_1$ of the synchronously received frame to matched filters $M[B_0(n)]$ and $M[B_1(n)]$ that matches to sequence $B_0(n)$ which is obtained by cyclically shifting core sequence $B_0$ by $n$ chips and similar sequence $B_1(n)$ respectively, producing received response matrix $\Phi$ by synchronously adding said matched filter outputs, solving a system of linear equations composed of $\Phi$, pilot matrix P generated by above-described $\{p\}$ and an unknown matrix $\tilde{b}(n)$, and detecting L data by making solved data estimates $\tilde{b}(n)$ on the hard-decision.

3. A cyclically shifted code division multiple access communications system according to claim 1 is **characterized in that** the transmitter comprises means of producing the extended sequence $E_{A0K}$ with period $T_E$ by arranging guard sequences at the front and the rear outside of a repeated core-sequence with time width $T_G$ which is made by repeating core-sequence $A_0$ by K times, generating extended sequences $E_{A0K}$, $E_{A1K}$, $E_{B0K}$ and $E_{B1K}$ using complementary sequences,

means of generating a cascaded sequence $\hat{E}_{AK}$ made of extended sequences $E_{A0K}$ and $E_{A1K}$, and a cascaded sequence $\hat{E}_{BK}$ made of extended sequences $E_{B0K}$ and $E_{B1K}$, generating modulated frames $\hat{E}_{AK}/f_k$ and $\hat{E}_{BK}/f_k$ obtained by modulating orthogonal carrier waves $f_k(k=0,1,2,...K-1)$ whose frequencies are different one another by integer times of the reciprocal of core frame period $T_G$ by cascaded sequences $\hat{E}_{AK}$ and $\hat{E}_{BK}$, generating a transmitting frame $s_{Pk}$ by modulating $\hat{E}_{AK}/f_k$ by pilot information $p_k$ and a transmitting frame $s_{Dk}$ by modulating $\hat{E}_{BK}/f_k$ by data $b_k$, and transmitting said transmitting frames synchronously, and

the receiver comprises means of applying front portion $r_0$ and rear portion $r_1$ of the synchronously received frame to matched filters $M(KA_0/f_k)$, $M(KB_0/f_k)$, $M(KA_1/f_k)$ and $M(KB_1/f_k)$ that match to the above-described repeated core sequences on carrier wave $f_k$ respectively, generating pilot matrix $\{p\}_k$ of the k-th user $u_k$ and data response matrix $\Phi_k$ of $u_k$ by adding synchronously the former two matched filter outputs and the latter two matched filter outputs, respectively, and obtaining estimate $\tilde{b}_k$ of transmitted data $b_k$ by solving a system of linear equations composed of these matrices.

4. A cyclically shifted code division multiple access communications system according to claim 3 is **characterized in that** the transmitter generates cascaded sequence $\hat{E}_B(n)$ made of extended sequences $E_{B0}(n)$ and $E_{B1}(n)$ which are obtained by cyclically shifting the extended sequences $E_{B0}$ and $E_{B1}$ by $n(=0,1,2,...L-1)$ chips, and composing a transmitting frame obtained by modulating cascaded sequence $\hat{E}_{BK}(n)$ on orthogonal carrier wave $f_k$ by transmitting data $b_{kn}(0,1,2,...L-1)$ of user $u_k$, and

the receiver applies front portion $r_0$ and rear portion $r_1$ of the synchronously received frame to matched filters $M[B_0(n)]$ and $M[B_1(n)]$ that match to sequence $B_0(n)$ which is obtained cyclically shifting by n chips of core sequence $B_0$ and to similar sequence $B_1(n)$ respectively, producing received response matrix $\Phi$ which is obtained by synchronously adding said matched filter outputs, solving a system of linear equations composed of $\Phi$, pilot matrix $P$ generated by above-described $\{p\}$ and an unknown matrix $\tilde{b}(n)$, and demodulating data $b_{kn}$ which user $u_k$ has transmitted, in a process of detecting $L$ data by making solved data estimate $\tilde{b}(n)$ on the hard decision.

5. A cyclically shifted code division multiple access communications system according to claim (3) or (4) is **characterized in that** $Q(=2,3,...)$ pieces of orthogonal carrier waves is assigned to the data transmission for user $u_k$, and the receiver demodulates using a common pilot information thereby the transmission capacity of each user is increased.

6. A cyclically shifted code division multiple access communications system according to claim 1 is **characterized in that** the pilot information is transmitted once in multiple N frames, and the data information is transmitted using the other ($N$-1) frames.

7. A cyclically shifted code division multiple access communications system according to claim 5 is **characterized in that** the pilot information is transmitted once in multiple $N$ frames, and the data information is transmitted using the other ($N$ -1) frames.

Fig. 1

Fig. 2

$s(t)$

(a)

(b)

Fig. 3

$(A_0 * A_0) + (A_1 * A_1)$

$(B_0 * B_0) + (B_1 * B_1)$

Fig. 4

Fig. 5

Fig. 6

TX

Fig. 7

(a)

Fig. 7

(b)

EP 1 237 313 A1

Fig. 8

$$T_E$$

$$T_G (= N_G T_D)$$

$$T_h \qquad T_D$$

$E_{A0}$ | $h_{A0}(0)$ | $A_0(0)$ | $A_0(0)$ | $A_0(0)$ | $l_{A0}(0)$ | $\times \hat{p}$

$E_{B0}(n)$ | $h_{B0}(n)$ | $B_0(n)$ | $B_0(n)$ | $B_0(n)$ | $l_{B0}(n)$ | $\times b_n$

Fig. 9

TX

$\hat{p}_0$

$b_{00} \sim b_{0,L-1}$

$TX_B$

$MOD_6$

$s_{a0}(t)$

$f_0$

$\hat{p}_1$

$b_{10} \sim b_{1,L-1}$

$TX_B$

$s_{a1}(t)$

$f_1$

$\hat{p}_{K-1}$

$b_{K-1,0} \sim b_{K-1,L-1}$

$TX_B$

$s_{a,K-1}(t)$

$f_{K-1}$

$\sum$

$s_a(t)$

(a)

RX

$MOD_7$

$r_a(t)$

$f_0$

$RX_B$

$b_{00} \sim b_{0,L-1}$

$f_1$

$RX_B$

$b_{10} \sim b_{1,L-1}$

$RX_B$

$b_{K-1,0} \sim b_{K-1,L-1}$

$f_{K-1}$

(b)

26

Fig. 10

Fig. 11

(b)

(a)

Fig. 12

FRAME DISPLAY    $F$    $F_n$    $F_{n+1}$

SPREADING-
SEQUENCE    $g_I(t)$
(IMPULSE)

BINARY
TRANSMISSION    $b_n$    "1"    "0"
DATA

TRANSMISSION
FRAME    $s_I(t)$
(IMPULSE)

TRANSMISSION
FRAME    $s(t)$    $g(t)$    $-g(t)$
$\begin{pmatrix} \text{RECTANGULAR} \\ \text{WAVEFORM} \end{pmatrix}$

$T_c$

$T$    $T$

29

## INTERNATIONAL SEARCH REPORT

| | International application No. |
|---|---|
| | PCT/JP01/07832 |

**A. CLASSIFICATION OF SUBJECT MATTER**
Int.Cl⁷ H04J13/04, H04B1/707

According to International Patent Classification (IPC) or to both national classification and IPC

**B. FIELDS SEARCHED**

Minimum documentation searched (classification system followed by classification symbols)
Int.Cl⁷ H04B1/69-1/713, H04J13/00-13/06

Documentation searched other than minimum documentation to the extent that such documents are included in the fields searched
Jitsuyo Shinan Koho          1926-1996     Toroku Jitsuyo Shinan Koho   1994-2001
Kokai Jitsuyo Shinan Koho   1971-2001     Jitsuyo Shinan Toroku Koho   1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | Naoki SUEHIRO et al., "Kanzen Souho Keiretsu wo mochiita Channel-kan Kanshou no nai Kinji Douki CDMA ni okeru Multipath no Suitei to Shingou no Tatamikomi ni yoru Shuuha-suu Riyou Kouritsu no Hiyaku-teki Zoudai", Denshi Joho Tsuushin Gakkai Gijutsu Kenkyuu Houkoku, 18 June, 1999 (18.06.99), Vol.99, No.124, SST99-6, pages 35 to 39 | 1,2<br>3-5<br>6,7 |
| X<br>Y<br>A | Naoki SUEHIRO et al., "Multipath no Seikakuna Suitei to Shingou no Tatamikomi ni yoru Shuuha-suu no Hiyakuteki Zoudai", 2000nen Denshi Joho Tsuushin Gakkai Sougou Taikai Kouen Ronbunshuu", Kiso Kyoukai, 07 March, 2000 (07.03.00), pages 418 to 419 | 1,2<br>3-5<br>6,7 |
| Y | Masakazu TAKAHASHI et al., "Kanzen Souho Keiretsu wo mochiita CDMA ni okeru Tajuu-ka Densou Tokusei no Ichi-Kentou", 2000nen Denshi Joho Tsuushin Gakkai Kiso Kyoukai Society Taikai Kouen Ronbunshuu, 07 September, 2000 (07.09.00), page 137 | 3-5 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 November, 2001 (26.11.01) | Date of mailing of the international search report<br>04 December, 2001 (04.12.01) |
|---|---|
| Name and mailing address of the ISA/<br>Japanese Patent Office | Authorized officer |
| Facsimile No. | Telephone No. |

Form PCT/ISA/210 (second sheet) (July 1992)

<table>
<tr><td colspan="2" align="center">**INTERNATIONAL SEARCH REPORT**</td><td>International application No.<br>PCT/JP01/07832</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | Mitsuhiro TOMITA et al., "Gold Keiretsu wo mochiita Pilot Frame Shien-kei CDMA Tsuushin Houshiki", Denshi Joho Tsuushin Gakkai Gijutsu Kenkyuu Houkoku, 18 June, 1999 (18.06.99), Vol.99, No.124, pages 41 to 48 | 1-7 |
| A | Hiroshi HARADA et al., "Chokkou Common Code ni yoru Fugou Bunkatsu Tajuu Heiretsu Densou Houshiki wo mochiita Kousoku Digital Rikujou Idou Tsuushin System", Denshi Joho Tsuushin Gakkai Gijutsu Kenkyuu Houkoku, 26 January, 1996 (26.01.96), Vol.95, No.491, pages 61 to 68 | 1-7 |
| A | JP 7-143110 A (Daiei Electronics K.K.), 02 June, 1995 (02.06.95), Full text; all drawings & JP 3111411 B2 | 1-7 |
| A | JP 11-261448 A (Naoki SUEHIRO), 24 September, 1999 (24.09.99), Full text; all drawings & WO 99/46878 A1     & EP 984578 A1 & CN 1269085 A | 1-7 |
| P,X<br>P,A | Masakazu TAKAHASHI et al., "Multipath Kankyou-ka ni okeru Kanzen Souho Keiretsu CDMA Houshiki no Soukan Tokusei ni tsuikte", Denshi Joho Tsuushin Gakkai Gijutsu Kenkyuu Houkoku, 13 October, 2000 (13.10.00), Vol.100, No.362, pages 7 to 12 | 1-5<br>6,7 |

Form PCT/ISA/210 (continuation of second sheet) (July 1992)